# EUROPEAN PATENT APPLICATION

(11) **EP 1 587 109 A1**
(43) Date of publication of application: **19.10.2005**
(21) Application number: 05252362.8
(22) Date of filing: 15.04.2005
(51) Int. Cl.: G11B 27/031, G06F 17/30

(54) **Editing system for audiovisual works and corresponding text for television news**

(30) Priority: 16.04.2004 US 562925 P; 22.03.2005 US 86149
(71) Applicant: AVID TECHNOLOGY, INC., Tewksbury, MA 01876 (US)
(72) Inventor: Howard, Johnathon E., Amesbury, Massachusetts 01913 (US); Procops, Roy, Wellesley, Massachusetts 02482 (US)
(74) Representative: Garratt, Peter Douglas

(57) **Abstract**

An audiovisual editing system associates segments of audiovisual materials with related text. The editing system permits an editor to edit the references to the audiovisual materials of a segment and to edit the related text. An estimated time for reading the related text aloud by the newscaster is determined. This estimated time for reading the related text of the segment may be compared to the actual duration of the audiovisual material of the segment. The difference in the duration of the audiovisual material and the duration of the related text may be displayed to the editor. Also, any position in the text for a segment may be mapped to a corresponding position in time in the audiovisual material for the segment, and this position may be indicated to the editor. Additionally, in response to edits of the related text of a segment, a corresponding editing operation can be automatically performed on the reference to the audiovisual information of the segment. These capabilities help a journalist to edit an audiovisual story through editing operations performed primarily on the script, copy or text that is being prepared by the journalist.

## Description

### RELATED APPLICATION

This application claims for priority the benefit of U.S. Provisional Application 60/562,925, filed on April 16, 2004, which is incorporated herein by reference.

### BACKGROUND

In television news, a story is developed in two parts. First, there is the audiovisual portion that includes video that is displayed on the television, and corresponding audio, if any. Second, a newscaster typically reads copy written by a journalist that corresponds to the audiovisual materials. It is important for the journalist to ensure that the copy, when read, is not longer or much shorter than the audiovisual materials to which it corresponds.

### SUMMARY

To address such needs of journalists and other editors, an audiovisual editing system associates segments of audiovisual materials with related text. The editing system permits an editor to edit the references to the audiovisual materials of a segment and to edit the related text. An estimated time for reading the related text aloud by the newscaster is determined. This estimated time for reading the related text of the segment may be compared to the actual duration of the audiovisual material of the segment. The difference in the duration of the audiovisual material and the duration of the related text may be displayed to the editor. Also, any position in the text for a segment may be mapped to a corresponding position in time in the audiovisual material for the segment, and this position may be indicated to the editor. Additionally, in response to edits of the related text of a segment, a corresponding editing operation can be automatically performed on the reference to the audiovisual information of the segment. These capabilities help a journalist to edit an audiovisual story through editing operations performed primarily on the script, copy or text that is being prepared by the journalist.

### BRIEF DESCRIPTION OF THE DRAWINGS

In the drawings,
Fig. 1 is a diagram of an example newsroom system including an editing system.
Fig. 2 is a diagram of an example user interface for the editing system in Fig. 1.
Fig. 3 is a diagram of an example data structure for representing a story in the editing system.

### DETAILED DESCRIPTION

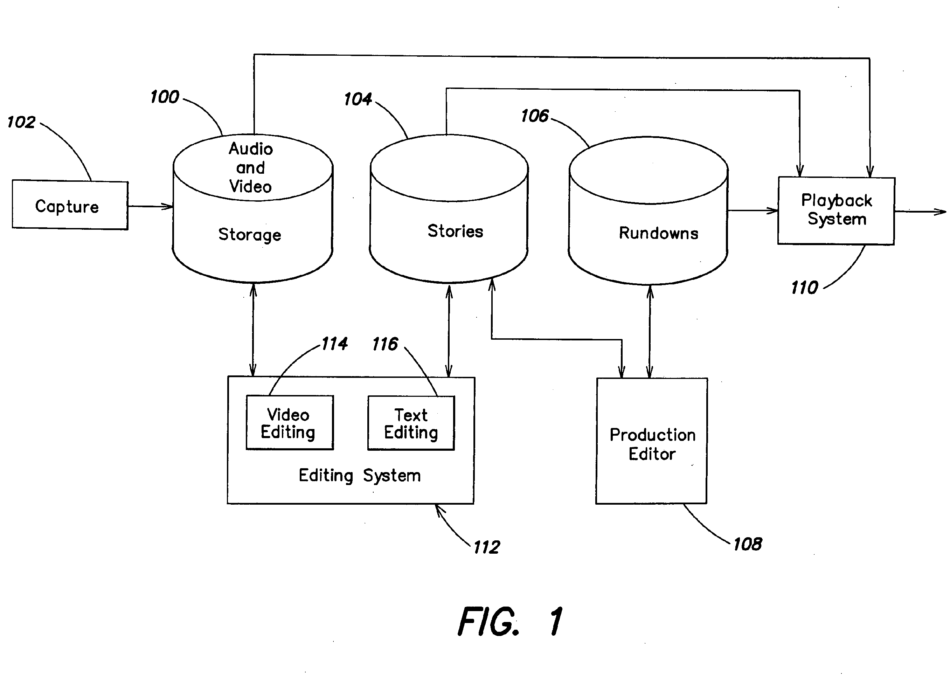

Referring now to Fig. 1, an example newsroom system including an editing system will now be described. This example newsroom system includes a source 100 of stored audiovisual information. This source 100 may include one or more computer-readable data storage devices, typically randomly-accessible, in which video and audio data in digital form may be stored in computer-readable data files. Audio and video data for a clip may be stored in the same file or in separate files. The audio and video data may be in any of a number of formats. The audio and video data typically is stored in such storage devices through a capture system 102. The stored audiovisual information also may include segments or clips, that define portions of the audio and/or video data using references, whether direct or indirect, to the audio and video data files and specified portions of the audio and video data stored in those files. The stored audiovisual information also may include compositions, which are combinations of segments or clips. The source of stored audiovisual information may include a server that stores audio and video files and/or a media asset management system.

Storage 104 also is provided for stories. Stories include the text that will be read by a newscaster, optional machine control information, and one or more references to audiovisual information. A story may be represented, for example, in the News Story Markup Language described in U.S. Patent 6,596,031, which is hereby incorporated by reference. A production editor 108 accesses stories and places them in a rundown 106, which represents the sequence of the stories to be played back by a playback system 110. The playback system accesses the text of the stories to provide it to, for example, a teleprompter and/or a machine control system. The playback system also accesses and plays back the audiovisual information, combined with other information, such as closed-captioning and/or the newscaster's voice (who reads the related text being displayed on the teleprompter).

An editing system 112 enables an individual to view and edit compositions of audiovisual information and associated stories. The editing system thus contains a video viewer and facilities for editing video 114 and facilities for editing text 116, to be described in more detail below. This editing system 112 associates segments of audiovisual materials with related text. The editing system permits an editor to edit the references to the audiovisual materials of a segment and to edit the related text. An estimated time for reading the related text aloud, e.g., by a newscaster, is determined. This estimated time for reading the related text of the segment may be compared to the actual duration of the audiovisual material of the segment. The difference in the duration of the audiovisual material and the related text may be displayed to the editor. Also, any position in the text for a segment may be mapped to a corresponding position in time in the audiovisual material for the segment, and this position may be indicated to the editor. Additionally, in response to edits of the related text of a segment, a corresponding editing operation can be automatically performed on the reference to the audiovisual information of the segment.

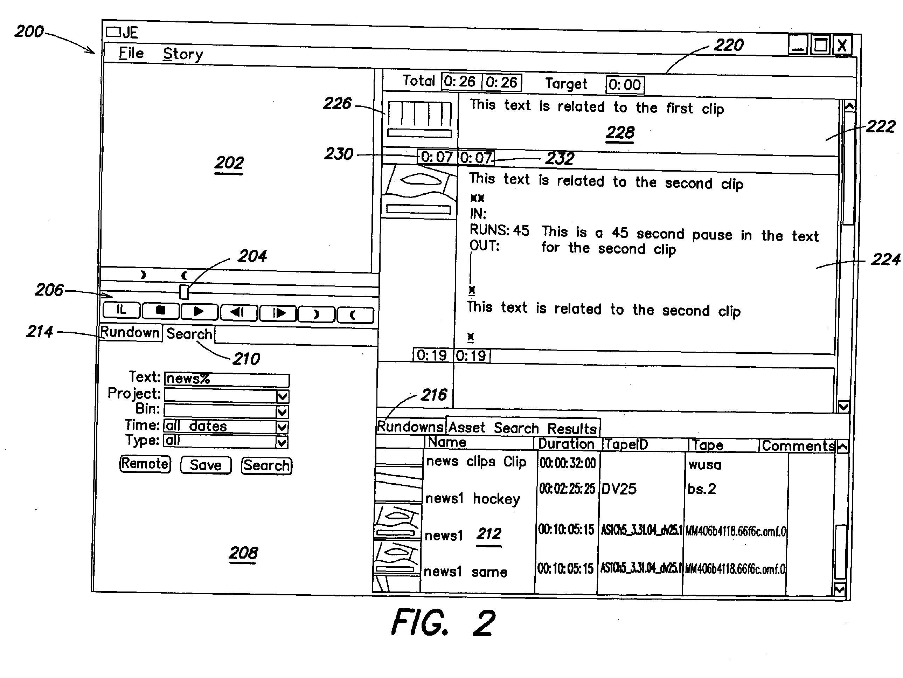

Fig. 2 is a diagram of an example user interface for the editing system in Fig. 1. In this interface 200, a video viewer 202 is provided. The viewer displays either a selected frame of a segment of video (based on the position of a position bar 204), or plays back the segment of video. The viewer includes conventional navigation and editing buttons 206 for play, pause, stop, fast forward, rewind and marking in and out locations (start and stop points) of a segment.

The interface 200 also may include a searching and browsing interface 208. By selecting a search tab 210, a user may query any media assets that are accessible by the editor either through a file system, database or other storage. Query results may be shown in interface 212. By selecting the rundowns tab 214, a user may browse a database, file system or other storage, for stories or rundowns of stories. A selected rundown then may be displayed in the interface 212 (by selecting the rundown tab 216).

The interface 200 also includes a story editing interface 220. The interface is a form of vertical timeline, with the start of the story at the top of the interface 220. A story includes a sequence of segments (e.g., 222, 224), wherein each segment includes a reference to audiovisual information for the segment, which is represented by a still frame 226, and related text 228. The duration of the audiovisual information is displayed, e.g., at 230. The estimated duration of the related text, when read, is displayed, e.g., at 232. The duration of the related text may be determined, for example, using the methods described in U.S. Patent 5,801,685. Note that machine control instructions or other text that is not read may be omitted from the timing computations, and that pauses for the reader of the text may represented by a command (IN:, RUNS:, OUT:) as shown in Fig. 2.

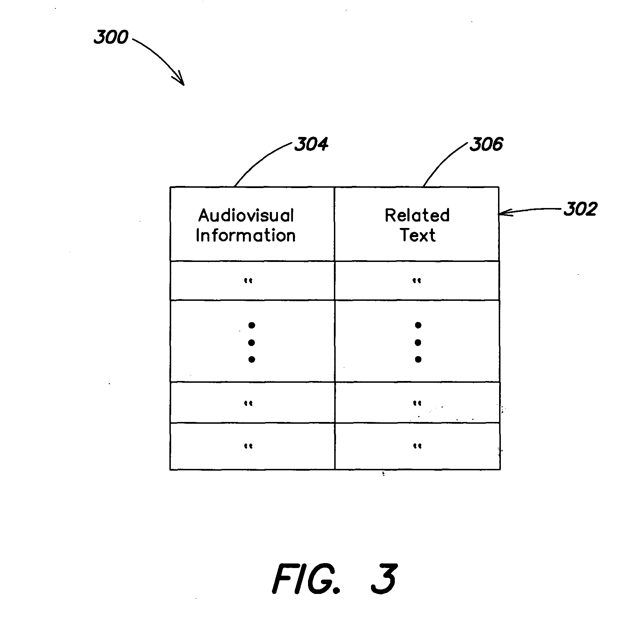

Fig. 3 is a diagram of an example data structure for representing a story in the editing system. Other data structures may be used. In this data structure 300, a story is defined as a list of pairs 302 of a reference 304 to a segment of audiovisual information and related text 306. The reference to the audiovisual information typically includes a direct or indirect reference to a data file that stores the audiovisual information and a range within the audiovisual information, such as indications of a start frame and a stop frame.

The interface of Fig. 2 permits a user to enter edit commands that cause the computer to modify the data structure that represents the story, e.g., such as in Fig. 3, and in turn to update the display to reflect the changes made to the data structure.

Because the duration of the audiovisual information for each segment is known and duration of the related text can be estimated, this information can be used to provide a number of useful editing capabilities.

For example, if the related text of a segment is too long, the reader, e.g., a newscaster, will not finish reading the text before playback of the subsequent segment of audiovisual information begins. If the text is too short, there may be silence or a lack of flow to the subsequent clip after the reader finishes reading the text. Accordingly, an indication of the difference between the duration of the audiovisual information and the duration of the related text may be displayed to the editor. This difference may be displayed as a number of frames of the video information, for example. Different colors may be used to display this difference according to whether the text is too long or too short. Also, the text may be shaded to indicate the extent of the text covered by the audiovisual information. A user may use these displays to trim the video or edit the text to make the durations match. A user-initiated operation (such as a menu command) can be provided to automatically make the durations of the text and video map by invoking a trim operation at the beginning or the end of either the audiovisual material or the text. A lock option may be enabled for a segment such that the audiovisual material is continually and automatically trimmed to match the duration of the associated text as the text is edited or changed.

Another useful operation that is possible using the estimated duration of text is to map a position in the text to a corresponding position in time in the audiovisual material for the segment. In particular, a cursor commonly represents a current editing position in text. The text between the cursor and the beginning of the text, or the cursor and the end of the text, may be used to determine a position in time corresponding to the cursor. The mapping of position between text and audiovisual material may be used to provide an indication of the current position in text, for example a moving highlight, during playback of the entire audiovisual sequence. The current position of playback in the video (such as shown by indicator 204 in Fig. 2) may be updated to match the cursor position.

The mapping of timing between text and audiovisual material also may be used to provide a crawling caption display of the text beneath the video monitor, with a fixed current position indicator, such that the text scrolls by in synchronization with the audiovisual playback and at any point during playback the text mapped to the current audiovisual position is aligned with the current position indicator.

Additionally, in response to edits of the related text of a segment, a corresponding editing operation can be automatically performed on the reference to the audiovisual information of the segment. For example, as text is added at the end of a segment that causes the duration of the text to be longer than the video segment, the video segment can be automatically trimmed to be longer. Similarly, as text is removed, the video segment can be automatically trimmed to be shorter. The user interface could also display whether there is sufficient video information to permit such trimming to be performed.

Other editing operations on the text can result in editing operations on the video information. For example, a text editing command to create a new paragraph or new page or page break could split a segment into two segments by creating a new segment of the story, which would include a reference to audiovisual information and the text occurring after the position in the text at which the editing command occurred.

These capabilities that help match video to text and text to video help a journalist to edit an audiovisual story through editing operations performed primarily on the script, copy or text that is being prepared by the journalist.

Although the foregoing describes a newsroom system, the combination of audiovisual information and related text may be used to develop any kind of story in which text for a script may be edited along with the audiovisual materials to which the script relates. For example, this combination may be used to prepare a documentary with a script to be read by a narrator as a voice over. Also, this editing system may be used to edit a script along with clips of video, animation, still pictures, or other media as part of a storyboarding function before and during production of additional media for the story. In this case, the clips used along with the script may be placeholders that are replaced by later produced media.

A system such as described herein may be implemented in software or hardware or firmware, or a combination of the three. The various elements of the system, either individually or in combination may be implemented as one or more computer program products in which computer program instructions are stored on a computer readable medium for execution by a computer. Various steps of a process may be performed by a computer executing such computer program instructions. The computer system may be a multiprocessor computer system or may include multiple computers connected over a computer network. The components shown in Fig. 1 may be separate modules of a computer program, or may be separate computer programs, which may be operable on separate computers. The data produced by these components may be stored in a memory system or transmitted between computer systems.

The various components of the system described herein may be implemented as a computer program using a general-purpose computer system. Such a computer system typically includes a main unit connected to both an output device that displays information to a user and an input device that receives input from a user. The main unit generally includes a processor connected to a memory system via an interconnection mechanism. The input device and output device also are connected to the processor and memory system via the interconnection mechanism.

One or more output devices may be connected to the computer system. Example output devices include, but are not limited to, a cathode ray tube display, liquid crystal displays and other video output devices, printers, communication devices such as a modem, and storage devices such as disk or tape. One or more input devices may be connected to the computer system. Example input devices include, but are not limited to, a keyboard, keypad, track ball, mouse, pen and tablet, communication device, and data input devices. The invention is not limited to the particular input or output devices used in combination with the computer system or to those described herein.

The computer system may be a general purpose computer system which is programmable using a computer programming language. The computer system may also be specially programmed, special purpose hardware. In a general-purpose computer system, the processor is typically a commercially available processor. The general-purpose computer also typically has an operating system, which controls the execution of other computer programs and provides scheduling, debugging, input/output control, accounting, compilation, storage assignment, data management and memory management, and communication control and related services. A memory system typically includes a computer readable medium. The medium may be volatile or nonvolatile, writeable or nonwriteable, and/or rewriteable or not rewriteable. A memory system stores data typically in binary form. Such data may define an application program to be executed by the microprocessor, or information stored on the disk to be processed by the application program. The invention is not limited to a particular memory system.

Having now described a few embodiments, it should be apparent to those skilled in the art that the foregoing is merely illustrative and not limiting, having been presented by way of example only. Numerous modifications and other embodiments are within the scope of the invention.

## Claims

1. An editing system, comprising:
means for representing an audiovisual story as a sequence of segments, wherein each segment is defined by one or more references to audiovisual information and related text;
means for permitting an editor to edit the related text of a segment;
means for editing the one or more references to the audiovisual information of a segment; and
means for determining a difference between an estimated duration for speaking the related text of each segment and a duration of the referenced audiovisual information of the segment.

2. The editing system of claim 1, further comprising means for displaying to the editor an indication of the determined difference.

3. The editing system of claim 1, further comprising means for indicating to the editor, during editing of the related text of a segment, a position in time in the audiovisual information that corresponds to a current position of an editing operation being performed in the related text.

4. The editing system of claim 1, wherein the means for editing the reference to the audiovisual information of a segment includes means, operative in response to edits of the related text of a segment, for automatically performing a corresponding editing operation to the reference to the audiovisual information of the segment.

5. An editing system, comprising:
means for representing an audiovisual story as a sequence of segments, wherein each segment is defined by one or more references to audiovisual information and related text;
means for permitting an editor to edit the related text of a segment; and
means, operative in response to edits of the related text of a segment, for automatically performing a corresponding editing operation on the referenced audiovisual information of the segment.

6. The editing system of claim 5, further comprising means for indicating to the editor, during editing of the related text of a segment, a position in time in the audiovisual information that corresponds to a current position of an editing operation being performed in the related text.

7. An editing system, comprising:
means for representing an audiovisual story as a sequence of segments, wherein each segment is defined by a reference to audiovisual information and related text;
means for permitting an editor to edit the related text of a segment;
means for indicating to the editor, during editing of the related text of a segment, a position in time in the audiovisual information that corresponds to a current position of an editing operation being performed in the related text.

8. The editing system of claim 7, further comprising means for editing the referenced audiovisual information of a segment.

9. A computer program product, comprising:
a computer readable medium;
computer program instruction stored on the computer readable medium that, when processed by a computer, instruct the computer to perform a process for editing an audiovisual story, comprising:
defining a data structure representing an audiovisual story as a sequence of segments, wherein each segment is defined by one or more references to audiovisual information and related text;
receiving instructions from an editor for editing the related text of a segment;
editing the one or more references to the audiovisual information of a segment; and
computing a difference between an estimated duration for speaking the related text of each segment and a duration of the referenced audiovisual information of the segment.

10. The computer program product of claim 9, wherein the process further comprises displaying to the editor an indication of the determined difference.

11. The computer program product of claim 9, wherein the process further comprises indicating to the editor, during editing of the related text of a segment, a position in time in the audiovisual information that corresponds to a current position of an editing operation being performed in the related text.

12. The computer program product of claim 9, wherein editing the reference to the audiovisual information of a segment includes automatically performing an editing operation on the reference to the audiovisual information of the segment in response to edits of the related text of the segment.

13. A computer program product, comprising:
a computer readable medium;
computer program instruction stored on the computer readable medium that, when processed by a computer, instruct the computer to perform a process for editing an audiovisual story, comprising:
defining a data structure representing an audiovisual story as a sequence of segments, wherein each segment is defined by one or more references to audiovisual information and related text;
receiving instructions from an editor for editing the related text of a segment; and
automatically performing an editing operation on the referenced audiovisual information of a segment in response to edits of the related text of the segment.

14. The computer program product of claim 13, wherein the process further comprises indicating to the editor, during editing of the related text of a segment, a position in time in the audiovisual information that corresponds to a current position of an editing operation being performed in the related text.

15. A computer program product, comprising:
a computer readable medium;
computer program instruction stored on the computer readable medium that, when processed by a computer, instruct the computer to perform a process for editing an audiovisual story, comprising:
defining a data structure representing an audiovisual story as a sequence of segments, wherein each segment is defined by one or more references to audiovisual information and related text;
receiving instructions from an editor for editing the related text of a segment; and
indicating to the editor, during editing of the related text of a segment, a position in time in the audiovisual information that corresponds to a current position of an editing operation being performed in the related text.

16. The computer program product of claim 15, wherein the process further comprises editing the referenced audiovisual information of a segment.
